Europäisches Patentamt

European Patent Office

Office européen des brevets

(11) Publication number: 0 349 315
A1

# EUROPEAN PATENT APPLICATION

(21) Application number: 89306601.9

(22) Date of filing: 29.06.89

(51) Int. Cl.⁵: **B 01 D 35/04**
C 02 F 1/28, C 02 F 1/00

(30) Priority: 29.06.88 GB 8815452

(43) Date of publication of application:
03.01.90 Bulletin 90/01

(84) Designated Contracting States:
AT BE CH DE ES FR GB GR IT LI LU NL SE

(71) Applicant: ADDIS LIMITED
Hertford SG13 7HL (GB)

(72) Inventor: Dagge, David Lester
57 Lucas Gardens
Barton Hills Luton LU3 4BG (GB)

Jenkins, Charles Richard
14 Great Molewood
Hertford Hertfordshire SG14 2PN (GB)

(74) Representative: Cooke, William Douglas et al
Hughes Clark & Co. P.O. Box 22 63 Lincoln's Inn Fields
London WC2A 3JU (GB)

(54) Filter cartridges and filter assemblies.

(57) Water to be purified contained in a reservoir (4) passes through a filter cartridge (3) to a receptacle (1). The water enters the cartridge through slots (14), travels downwards round a baffle (11), then upwards between the baffle and a wall (12) to be discharged through slots (16). The purified water is eliminated between the cartridge and a wall of reservoir recess (8). Flow is controlled by hood (18) manually positioned by screw (21) when rod (22) is turned. A manually actuated unidiriectional indicator rotor can monitor the number of operations. Reservoir (4) rests on a stand (2, 6) from which the receptacle can easily be removed but the reservoir can also rest directly on the receptacle, located by rib (36).

FIG.2.

EP 0 349 315 A1

## Description

## FILTER CARTRIDGES AND FILTER ASSEMBLIES

This invention relates to filter cartridges, filter reservoir assemblies incorporating such cartridges and filter assemblies consisting of such filter reservoir assemblies and matching receptacles for receiving purified liquid from the reservoir assemblies.

The invention is primarily concerned with freshwater filters for domestic use, for example in kitchens and an object of the invention is to provide such filters that are particularly easy to handle and use while being very compactly constructed.

In known filter assemblies of this kind the filter cartridge is not at all times covered or immersed in the water to be filtered. This has the disadvantage that part of the filter cartridge is exposed to the atmosphere and may be contaminated by airborne bacteria.

The object of the present invention is to overcome this disadvantage of known filter assemblies and provide a filter cartridge which when in use is completely immersed in the water being filtered.

According to one aspect of the invention, a filter cartridge for a liquid purifier comprises an otherwise closed container having a top wall formed centrally with inlet apertures for the ingress of liquid to be purified and with a peripheral flange formed with outlet apertures substantially at the same level as the inlet apertures for the discharge of liquid after passing through filtering material inside the cartridge, and a tubular baffle extending downwards from the top wall, the arrangement being such that liquid to be purified passes downwards from the inlet apertures inside the tubular baffle, then upwards between the baffle and a peripheral wall of the container body to be discharged through the outlet apertures.

According to a further aspect of the invention, a filter reservoir assembly comprises a reservoir for liquid to be purified and has a bottom wall formed with a recess in which a filter cartridge as defined above is so fitted that when liquid, having ben purified, passes through the outlet apertures it continues downwards between the cartridge and a wall of the recess to be discharged at the bottom of the recess.

According to another embodiment of the invention, a filter assembly comprises: a filter reservoir assembly, a receptacle for receiving purified liquid from the reservoir assembly and a stand comprising a base for supporting the receptacle, a ring for supporting the reservoir assembly and strut means securing the ring above the base in a position for the receptacle to receive the purified liquid and yet leaving the receptacle free to be moved from the base without disturbing the reservoir assembly, the filter reservoir assembly comprising a reservoir for liquid to be purified and having a bottom wall formed with a recess containing a filter cartridge arranged for the liquid to pass therethrough to the receptacle and the filter reservoir assembly and the receptacle being formed for the reservoir assembly alternatively to rest directly on the top edge of the receptacle, without the intervention of the stand, while delivering purified liquid to the receptacle.

In order that the invention may be clearly understood and readily carried into effect, examples thereof will now be described with reference to the accompanying drawings, in which:-

Figure 1 is a side elevation of a domestic freshwater filter assembly;

Figure 2 is a section on the line II-II in Figure 1;

Figure 3 is a side elevation of a modification of the assembly of Figures 1 and 2;

Figure 4 is a section on the line IV-IV of Figure 3; and

Figure 5 is a plan of a detail common to the assemblies of Figures 1 to 4.

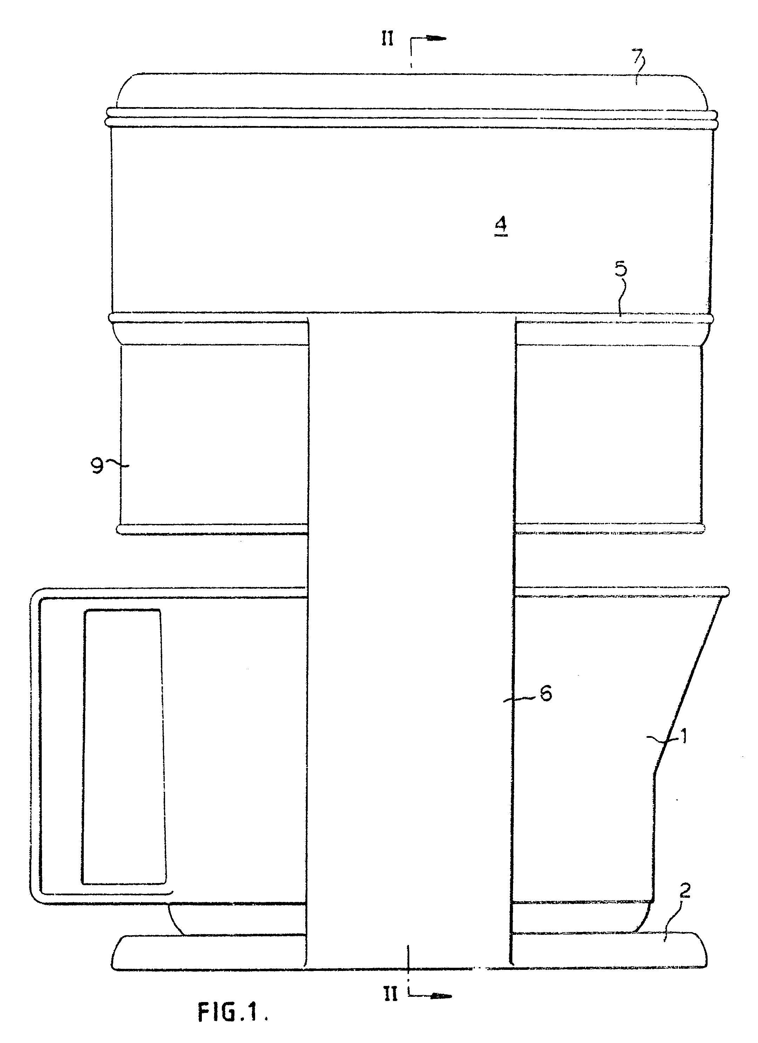

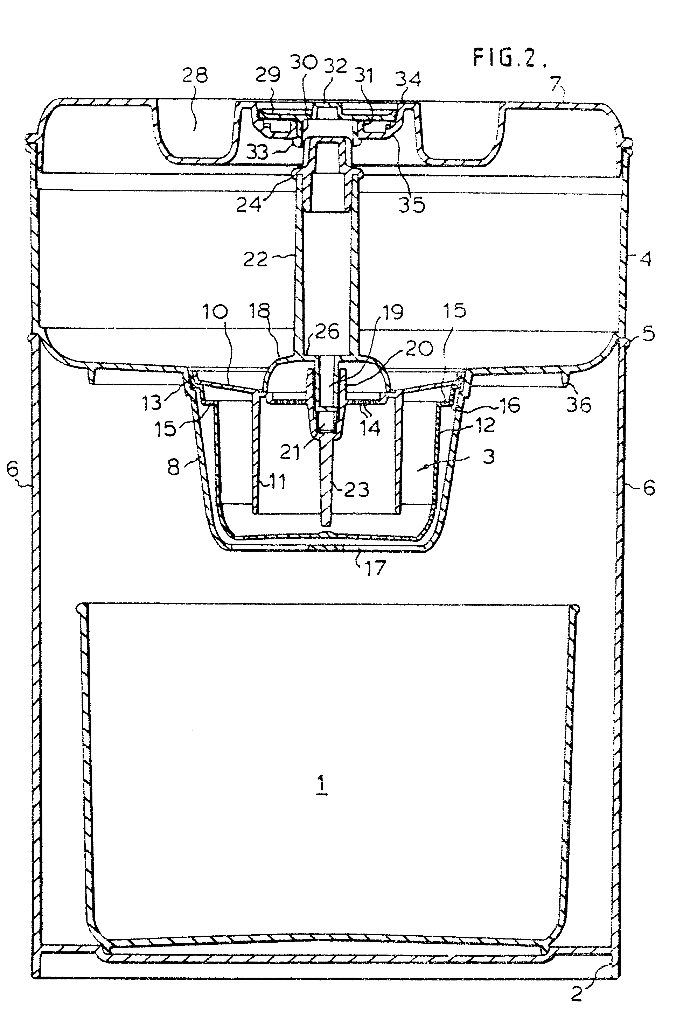

Referring to Figures 1 and 2, a jug 1 resting on a base 2 receives filtered water, after passing through a filter cartridge 3, from a reservoir 4 removably mounted on a ring 5 integral with struts 6 extending upwards from the base 2. The jug 1 can easily be withdrawn from the base 2 either for dispensing filtered water or for refilling the reservoir 4 after removal of a lid 7 therefrom. The jug 1 is graduated in fractions of pints and litres and when not in use may be covered by a lid (not shown) with small holes positioned to allow water to pass through from the reservoir. The reservoir 4 and jug 1 are made of transparent material.

The filter cartridge 3 is located in a recess 8 extending downwards centrally from the reservoir 4 within a cylinder 9 extending downwards form the ring 5. The filter cartridge 3 is made up of two parts, namely a cover 10 formed with a cylindrical baffle 11 and a cup-shaped container 12. These two parts fit together at 13 and the unit is fitted tightly into the top of the recess 8. The cartridge unit is filled with water treatment materials of which many are known. Clearly filter cartridges containing different water treatment materials can easily be interchanged.

In operation, water in reservoir 4 passes downwards through slots 14 at the centre of the cover 10, then through the cylindrical baffle 11 to return between the baffle 11 and container 12 to be discharged through slots 15 in a peripheral flange 16 from which the water travels downwards between the container 12 and the recess 8 and then through large openings 17 in the bottom of the recess 8 to the jug 1. It will be seen that the slots 15 are level with the slots 14, so that the filter cartridge is totally immersed in the water thus preventing any bacteria from contaminating the filter.

To control the rate of water through the slots 14 between zero and a predetermined maximum, a hood 18 is adjustable vertically between the lowermost position shown in Figure 2 in which it completely closes off the slots 14 and higher positions. For this purpose the hood 18, which is detachably mounted is formed with a downwardly extending spigot 19 rotatable in a sleeve 20 centrally disposed in the cover 10. The spigot 19 has a screw extension 21 threaded in the sleeve 20 so that when, after removal of the lid 7, the hood 18 is manually turned by a vertical rod 22, it goes up or down as required. A central projection 23 extends down from the sleeve 20 and the vertical rod 22 is tubular and receives a cap 24 at the top above the usual upper level of water in the reservoir 1. The cap 24 is a taper fit in the tubular rod so that it can be used to turn the hood 18. The tubular rod may be used as a vent pipe, an opening (not shown) being provided in the hood 18 at 26, and an air inlet slot being provided between the cap 24 and tubular rod 22.

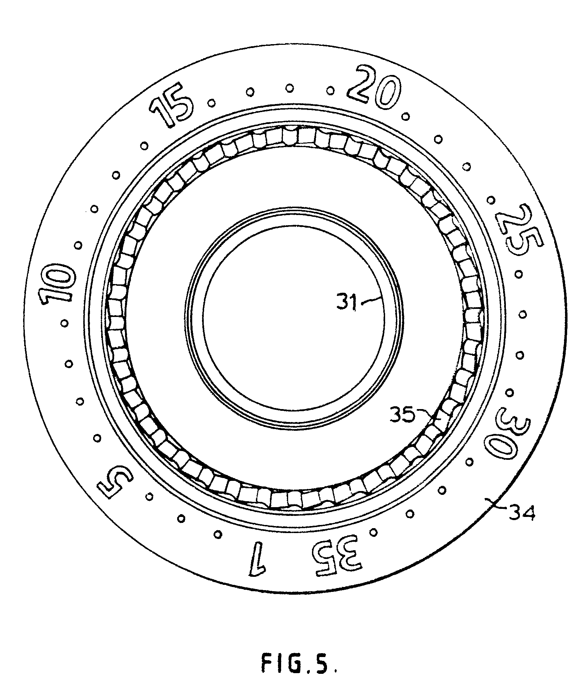

The lid 7 is formed with an annular depression 28 providing a finger-grip. The lid 7 is also formed with a depression containing a counter disc 29 having a trunnion 30 rotatable in journal 31 and formed with a knob 32 for turning it and a flange 33 to prevent it from being lifted away from the lid 7. As shown in Figure 5, the rim 34 of the depression has a nearly complete circle of graduations 1-35. Within this circle is a ring 35 of ratchet teeth engaged by a pawl (not shown) on the disc 29 to limit its movement to clockwise rotation. An index on the disc is used to monitor the number of filter operations for which the cartridge has been used. The capacity of the reservoir can conveniently be two litres.

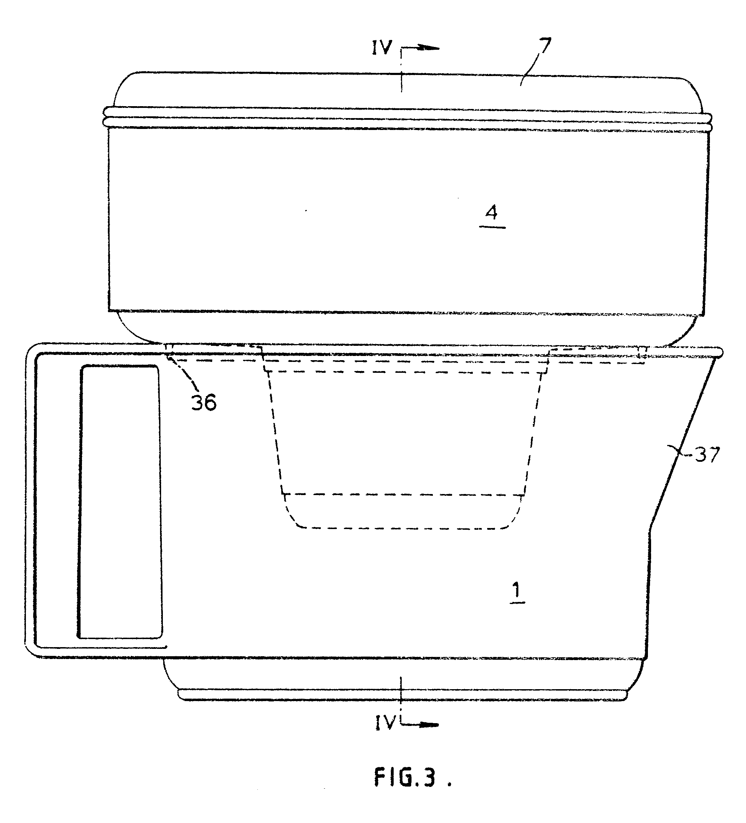

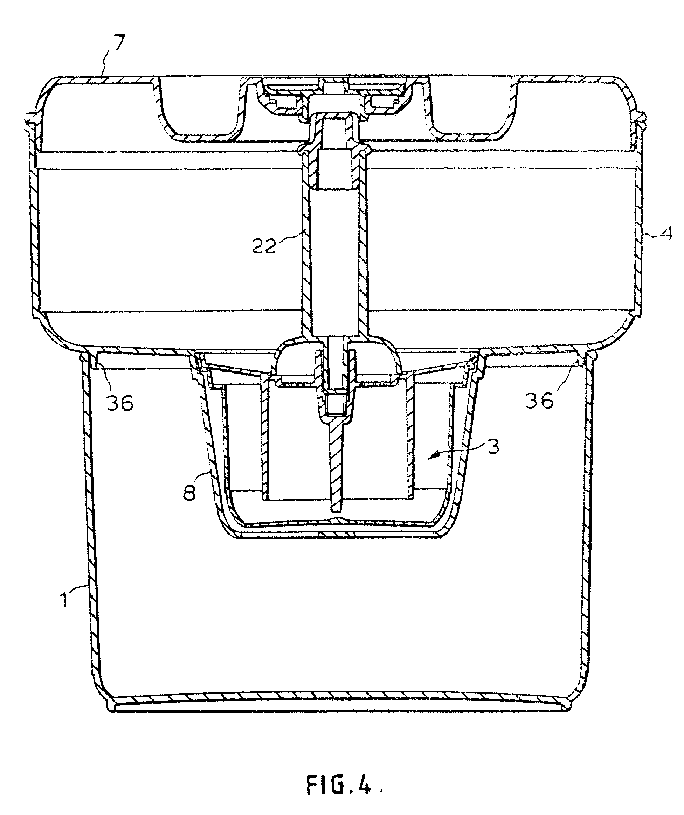

Figures 3 and 4 show a reservoir 4, filter cartridge 3 and lid 7 with their attached parts identical to the design shown in Figures 1 and 2. However, in Figures 3 and 4, the reservoir 4 rests directly on top of the jug 1. A shallow annular flange 36 on the bottom of the reservoir fits into the top rim of the jug except in the vicinity of its spout 37. This enables the jug to be tilted without first removing the reservoir. Moreover the symmetry of the reservoir enables it to be placed on the jug in any position about its vertical axis. Thus, an economy in production is effected by arranging that precisely the same filter reservoir assembly can be supplied either with the stand consisting of the base 2, struts 6, ring 5 and cylinder 9, as well as the jug, or only with the jug.

## Claims

1. A filter cartridge (3) for a liquid purifier, comprising an otherwise closed container having a top wall (10) formed centrally with inlet apertures (14) for the ingress of liquid to be purified characterised in that the cartridge is provided with a peripheral flange (16) formed with outlet apertures (15) substantially at the same level as the inlet apertures for the discharge of liquid after passing through filtering material inside the cartridge, and that a tubular baffle (11) extending downwards from the top wall, the arrangement being such that liquid to be purified passes downwards from the inlet apertures (14) inside the tubular baffle, then upwards between the baffle and a peripheral wall (12) of the container body to be discharged through the outlet apertures (15).

2. A filter cartridge according to Claim 1, characterised in that it is constituted by two parts, namely a lid (10) formed with the inlet apertures and a cup-shaped body (12) provided with the said flange, the lid being integral with the tubular baffle and fitted into the top rim of the cup-shaped body.

3. A filter reservoir assembly comprising a reservoir (4) for liquid to be purified characterised in that the reservoir has a bottom wall formed with a recess (8) in which a filter cartridge according to Claim 1 or Claim 2 is so fitted that when liquid having been purified passes through the outlet apertures (15) it continues downwards between the cartridge and a wall of the recess to be discharged at the bottom (17) of the recess.

4. A filter reservoir assembly according to Claim 3, characterised in that it is provided with a hood (18) adjustable mounted on the top of the cartridge to be manually adjusted between a position in which it closes off access of the liquid to the inlet apertures (14) and a selected one of a range of higher positions in which it provides a corresponding access of the liquid to the inlet apertures.

5. A filter reservoir assembly according to Claim 4, characterised in that a screw-threaded connection (20, 21) is provided between the hood and the top of the cartridge and a rod (22) extends upwards from the hood whereby the hood may be turned from above the normal level of liquid in the reservoir to adjust the height of the hood by way of the screw-threaded connection.

6. A filter reservoir assembly according to any one of Claims 3 to 5, characterised in that the reservoir is provided with a detachable lid (7) carrying a counter rotor (29) unidirectionally rotatable through numbered discrete positions for monitoring the number of filter operations for which the cartridge has been used.

7. A filter assembly characterised in that it comprises a filter reservoir assembly according to any one of Claims 3 to 6, a receptacle (1) for receiving purified liquid from the reservoir assembly and a stand comprising a base (2) for supporting the receptacle, a ring (9) for supporting the reservoir assembly and strut means (6) securing the ring above the base in a position for the receptacle to receive the purified liquid and yet leaving the receptacle free to be moved from the base without disturbing the reservoir assembly.

8. A filter assembly according to Claim 7, characterised in that the reservoir assembly and receptacle are formed for the reservoir assembly to rest directly on the top edge of the receptacle (1), without the intervention of the stand, while delivering purified liquid to the receptacle.

9. A filter assembly according to Claim 7 or Claim 8, characterised in that the reservoir and the receptacle are made of transparent material.

10. A filter assembly comprising a filter reservoir assembly having a reservoir (4) for liquid to be purified and having a bottom wall formed with a recess (8) cotaining a filter cartridge (3) arranged for the liquid to pass therethrough to a receptacle (1) for receiving purified liquid from the reservoir assembly characterised in that a stand comprising a base (2) for supporting the receptacle, a ring (9) for supporting the reservoir assembly and strut means (6) securing the ring above the base is arranged so that the ring is in a position for the receptacle to receive the purified liquid and yet leaves the receptacle free to be moved from the base without disturbing the reservoir assembly, and that the filter reservoir assembly and the receptacle are formed for the reservoir assembly alternatively to rest directly on the top edge of the receptacle, without the intervention of the stand, while delivering purified liquid to the receptacle.

FIG.1.

FIG. 2.

IV

7

4

36

37

1

IV

FIG.3 .

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 235 315 (LEIFHEIT)<br>* Whole document *<br>--- | 1,4-8,<br>10 | B 01 D 35/04<br>C 02 F 1/28<br>C 02 F 1/00 |
| X | DE-U-8 525 643 (E. ALHÄUSER)<br>* Pages 5,6,11; figures 1-2 *<br>--- | 1-2 | |
| X | EP-A-0 155 645 (BRITA)<br>* Page 2, line 36 - page 4, line 14;<br>page 6, lines 6-33; page 9, line 36 -<br>page 11, line 11; figures 1,3 *<br>--- | 1-3 | |
| X | CH-A- 533 994 (DOMNICK HUNTER)<br>* Whole document *<br>--- | 1,2,9 | |
| A | GB-A-2 197 647 (PRECISION ENGINEERING)<br>* Page 1; figures 1-2 *<br>----- | 1-10 | |

TECHNICAL FIELDS SEARCHED (Int. Cl.5)

C 02 F
B 01 D
B 01 J

The present search report has been drawn up for all claims

| Place of search | Date of completion of the search | Examiner |
|---|---|---|
| THE HAGUE | 05-10-1989 | VAN AKOLEYEN H.T.M. |

EPO FORM 1503 03.82 (P0401)